# EUROPÄISCHE PATENTANMELDUNG

(11) **EP 4 446 828 A1**
(43) Veröffentlichungstag der Anmeldung: **16.10.2024**
(21) Anmeldenummer: 24169714.3
(22) Anmeldetag: 11.04.2024
(51) Int. Cl.: G05B 15/02, F25B 49/02

(54) **ENERGIEBEDARFSPROGNOSE FÜR DIE LEISTUNGSREGELUNG EINER WÄRMEPUMPE**

(30) Priorität: 11.04.2023 DE 102023109032
(71) Anmelder: Vaillant GmbH, 42859 Remscheid NRW (DE)
(72) Erfinder: Küchler, Daniela, 42119 Wuppertal (DE); Fleischmann, Sebastian, 58285 Gevelsberg (DE)
(74) Vertreter: Popp, Carsten

(57) **Zusammenfassung**

Verfahren zur Regelung einer elektrischen Wärmepumpe zur Beheizung eines Gebäudes mittels eines Leistungsplans, umfassend die folgenden Schritte:
• Auswertung von Daten, die von der Wärmepumpe und der zugehörigen Regelungstechnik an eine Datenerfassungsinstanz übermittelt wurden,
• Erfassen von historischen Wetterdaten am Standort der Wärmepumpe,
• Verbindung der gesammelten Zeitreihendaten mittels einer Datenanalyse,
• Erstellung eines Modells von Wärmeerzeugern und Verbrauchern,
• Anpassung des Lastmodells an spezifische Eigenschaften von einzelnen Verbrauchern,
• Prüfung, ob Umstände eine Neuauswertung erfordern,
• Erstellung eines Leistungsplans aus der Vorhersage des elektrischen Energiebedarfs und Regelung der Wärmepumpe damit.

## Beschreibung

Die Erfindung betrifft die Vorhersage des elektrischen und ggfs. thermischen Energiebedarfs eines Energieverbrauchsystems, speziell von Wärmepumpensystemen. Die Vorhersage basiert auf der Auswertung historischer Daten des Wärmeerzeugers, die den elektrischen Energiebedarf des speziellen Energieverbrauchsystems betreffen. In Kombination mit externen Faktoren, wie z.B. der Wettervorhersagen, wird so der elektrische und auch der thermische Energiebedarf prognostiziert.

Diese Erfindung ist speziell auf elektrische Wärmepumpen angelegt, welche elektrische Energieverbraucher und thermische Energieerzeuger sind. Generell wird die Ansteuerung einer elektrischen Wärmepumpe von der Energiebedarfsseite her betrachtet. Die Ansteuerung einer elektrischen Wärmepumpe wird über eine bestimmte Erzeugungstemperatur als Zielwert oder über eine thermische Energieleistung vorgegeben. Mit diesen Vorgaben wird sichergestellt, dass der von der Wärmepumpe versorgte Verbraucher mit der notwendigen thermischen Energie versorgt wird.

Weiterhin gibt es einen starken Trend hin zur Elektrifizierung. So benutzen beispielsweise Endkunden heutzutage elektrische Wärmepumpen zur Beheizung ihres Hauses, sowie elektrisch betriebene Kraftfahrzeuge, und erzeugen elektrischen Strom über eine eigene Photovoltaik-Anlage. Dadurch treffen zeitlich variable Anreizgrößen, wie ein zeitlich variabler Strompreis auf zeitlich flexible Verbraucher, wie z.B. eine Wärmepumpe oder das Laden eines Elektroautos. Vor diesem Hintergrund erscheint es sinnvoll diese zeitlich flexiblen Energieverbraucher an die jeweils verfügbare Leistung mit niedrigem Strompreis oder hohem Anteil an erneuerbaren Energien anzupassen.

Existierende Lösungen nutzen zum Beispiel Lastprofile oder Cluster von Zeitreihen von Verbrauchsprofilen, um eine Leistungsregelung von elektrischen Speichern durchzuführen, wie in der EP 3 021 445 B1 beschrieben. Weiterhin existieren verschiedene algorithmische Ansätze zur Prognose des thermischen Verhaltens eines Gebäudes, siehe hierzu Hassan Harb e.a., Development and validation of grey-box models for forecasting the thermal response of occupied buildings, Energy and Buildings 117 (2016), 199-207, Elsevier B.V., und darin enthaltene Referenzen.

Die Ansteuerung elektrischer Wärmepumpen kann zum derzeitigen Stand der Technik noch nicht von der Seite des elektrischen Bedarfs unter Berücksichtigung des zu erwartenden thermischen Bedarfs ausgeführt werden. Das heißt konkret, dass es noch keine technisch schlüssigen Konzepte gibt, wie eine elektrische Wärmepumpe über einen elektrischen Leistungssollwert auf eine elektrische Verbrauchsleistung geregelt werden kann, die dem aktuellen Leistungslevel von aktuell verfügbarem günstigen Photovoltaikstrom oder anderen günstigen Quellen entspricht. Dementsprechend können elektrische Wärmepumpen nicht über einen elektrischen Leistungsplan geregelt werden, der über die nächsten Stunden an eine Prognose des Energieverbrauchs und von günstigen Strompreisen und Leistungslevel angepasst wird.

Die EP 2 834 573 B1 beschreibt ein System zur Bereitstellung von Wärme und ein Betriebsverfahren für ein solches System. Das System besteht dabei im Wesentlichen aus einer Wärmepumpe, die mit Solarstrom betrieben wird und einem Wärmespeicher. Hierbei muss eine Bedarfsplanung stattfinden, bei der ausreichend Wärme zu speichern ist, damit stets genug Wärme zur Verfügung gestellt werden kann. Praktisch bedeutet das, dass eine sehr groß dimensionierte Photovoltaikanlage und ein sehr großer Wärmespeicher mit einer erheblichen Wärmekapazität vorgesehen werden muss, um Zeiten mit schwacher solarer Einstrahlung überbrücken zu können. Ein paralleler Bezug von elektrischer Energie aus anderen Quellen oder eine Abgabe an externe Verbraucher ist nicht vorgesehen.

Andere existierende Lösungen nutzen hingegen häufig nur überschüssige Photovoltaik-Leistung, um damit eine Wärmepumpe in bestimmten Zeiträumen zu betreiben und damit einen thermischen Energiespeicher oder ein Gebäude zu heizen. In diesem Fall wird jedoch nicht der erwartete thermische Bedarf über einen Zeitraum von beispielsweise einem Tag berücksichtigt. Es ist somit nicht möglich die Laufzeit der Wärmepumpe optimal an die variablen elektrischen Energietarife anzupassen. Dann kann man optimal die günstigen Strompreise berücksichtigen und den Energiebedarf entsprechend angepasst verteilen. Dieser elektrische Leitungsplan kann dann an den Wärmeerzeuger weitergeleitet werden, um den nötigen elektrischen Leistungssollwert weiterzugeben.

Es ist auch bekannt, den Energiebedarf mit den Stromkosten abzugleichen und den Bedarf anhand bekannter und prognostizierter Wetterdaten abzuschätzen. So lehrt die DE 10 2018 116 845 A1 ein Verfahren zum Betreiben einer Wärmepumpe, die dazu ausgelegt ist, thermische Energie für die Beheizung eines Gebäudes zu erzeugen. Das dort beschriebene Verfahren zeichnet sich dadurch aus, dass die Wärmepumpe unter Zuhilfenahme einer prädiktiven Regelung so betrieben wird, dass sie zumindest zeitweise eine dem aktuellen Heizenergiebedarf überschreitende Menge an thermischer Energie erzeugt, um gezielt eine zeitliche Verschiebung des Bezuges von der Wärmepumpe benötigter elektrischer Energie zu bewirken. Hierbei werden zwei Planungsstufen vorgenommen, nämlich einer Einsatzplanung ohne Berücksichtigung des Gebäudes als Speicher und Vernachlässigung von Verlusten, und Berücksichtigung geplanter Vorlauftemperaturen und Verlusten der technischen Speicher. Die elektrische Energie kann dabei von extern bezogen werden oder einer vorhandenen Photovoltaikanlage entstammen, wobei jeweils Preismodelle bei der Optimierung verwendet werden.

Die Aufgabe der Erfindung ist daher, für einen elektrischen Verbraucher, speziell eine elektrische Wärmepumpe, die Prognose des elektrischen Bedarfs im Form eines Leistungsplans zu erstellen und damit den elektrischen Verbraucher zu regeln. Die Erfindung löst die Aufgabe der Vorhersage des zukünftigen elektrischen Energiebedarfs einzelner Wärmeerzeuger durch folgende Schritte:

In einem ersten Schritt erfolgt eine Auswertung von Daten mit mathematischen Mitteln, die zum Teil bereits im Wärmeerzeuger und der zugehörigen Regelungstechnik erfasst werden. Die benötigten Daten werden in regelmäßigen Zeitabständen vom Wärmeerzeuger und der zusätzlichen Sensorik über ein Kommunikationssystem an eine Datenerfassungsinstanz übermittelt und dort über einen längeren Zeitraum gespeichert.

In einem zweiten Schritt werden Wetterdaten vom Standort des Wärmeerzeugers gesammelt und in der Datenerfassungsinstanz gespeichert. Diese Daten können aus der Regelungstechnik am Standort des Wärmeerzeugers selber stammen oder auch aus anderen externen Datenquellen in der Datenerfassungsinstanz zusammengeführt werden.

In einem dritten Schritt werden die gesammelten Daten miteinander verbunden. Bei der Datenanalyse werden zunächst die über einen bestimmten Zeitraum aufgezeichneten Daten zu einem Heizsystem, speziell von elektrischen Wärmepumpen, zusammengeführt. Dazu gehören Zeitreihendaten der Sensormessungen wie zum Beispiel der gemessenen oder angezielten Temperatur, des Energieverbrauchs, sowie der zugehörigen Wetterdaten. Diese Daten werden verwendet, um einen Vorhersagemechanismus mit Hilfe eines Computer-Algorithmus mittels eines Datenverarbeitungssystems zu trainieren, sogenanntes maschinelles Lernen.

In einem vierten Schritt werden die historischen Daten eines Wärmeerzeugers, die eine gute Kenntnis des elektrischen und thermischen Energiebedarfes des zugehörigen Gebäudes und Verbrauchers liefern, dazu verwendet, ein Modell für individuelle Wärmeerzeuger und Gruppen von Wärmerzeugern/Verbrauchern zu erstellen. Dazu werden Daten aus verschiedenen Betriebsphasen eines Systems genutzt. Neben Zeiträumen, bei denen die hier beschriebene Steuerung aktiv war, lassen sich ebenso historischen Daten aus Zeiträumen nutzen, zu der der Wärmeerzeuger über die Standardsteuerung, wie zum Beispiel eine Heizkurven-basierte witterungsgeführte Regelung betrieben wurde.

In einem fünften Schritt werden mit Hilfe der Methoden des maschinellen Lernens automatische Anpassungen des Lastmodells an spezifische Eigenschaften von einzelnen Verbrauchern bestimmt. Dabei lernt das Modell den elektrischen und gegebenenfalls thermischen Energiebedarf, der nötig ist, um Wärmeverluste auszugleichen, ebenso wie den elektrischen und gegebenenfalls thermischen Energiebedarf für die Anpassung der aktuellen Temperatur des Gebäudes an einen bestimmten Zielwert durch Aufheizung.

Es ist dabei nicht notwendig, Parameter wie die Isolierung des Gebäudes und die Effizienz des Wärmeerzeugers explizit anzugeben oder gar manuell in das System einzupflegen. Ein so erhaltenes Modell wird benutzt, um die Vorhersage des elektrischen und gegebenenfalls thermischen Energiebedarfs über einen vorgegebenen Zeitraum zu erstellen. Dabei kombiniert das Modell die gelernte Kenntnis mit Daten der Wetterprognose und den aktuellen Betriebszuständen sowie gemessenen Parametern, wie zum Beispiel aktueller Raumtemperaturen. Das beschriebene Verfahren kann sowohl für den elektrischen Bedarf zur Erzeugung von Heizwärme verwendet werden, aber auch für den elektrischen Bedarf zur Erzeugung von Brauchwarmwasser.

Das Datenverarbeitungssystem kann systemspezifische Modelle, d.h. Modelle für ein bestimmtes Gebäude/Wärmeerzeuger, und systemübergreifende Modelle erlenen und speichern. Das Training der Modelle kann zeitbasiert in regelmäßigen Abständen ausgeführt werden oder auch durch externe Trigger, die unter anderem die Prognosegüte der Modelle überwachen. Das Datenverarbeitungssystem verfügt zusätzlich über die Möglichkeit, die Prognose der Modelle mit tatsächlich gemessenen Werten zu vergleichen und damit die Güte der einzelnen Modelle zu bewerten. Die Bewertung der Prognosegüte kann unter Anderem benutzt werden, um zu entscheiden, welches von mehreren eventuell bereitstehenden Modellen zur Prognose eingesetzt werden soll.

Die beschriebene Vorhersage kann den vollen Vorhersagehorizont z.B. des nächsten Tages betreffen, oder auch kleinere Zeitabschnitte auflösen, wie zum Beispiel stündliche Vorhersagen. Das Datenverarbeitungssystem ist in der Lage auf der Basis der im zuvor beschriebenen Modul trainierten Modelle und der verfügbaren aktuellen Daten zeitbasiert in regelmäßigen Abständen oder durch externe Trigger eine Prognose bereitzustellen. Die Vorhersage des Energiebedarfs kann auf der Basis von systemspezifischen Modellen erfolgen oder auch auf einer Kombination von systemspezifischen und systemübergreifenden Modellen. Im letzteren Fall wird ein geeignetes systemübergreifendes Modell benutzt, um generell wiederkehrende Muster im Verbrauchsverhalten zu erlernen, welche in einem weiteren Schritt mit einem systemspezifischen Modell präzisiert werden, um individuelle Gebäude- und Verhaltensspezifika zu berücksichtigen.

In einem sechsten Schritt wird geprüft, ob Umstände eine Neuauswertung erfordern. Bestimmte Umstände können die Notwendigkeit einer erneuten Auswertung des elektrischen Energiebedarfs auslösen. Ein solcher Umstand kann beispielsweise eine Änderung der Wettervorhersage oder eine signifikante Abweichung des tatsächlichen Bedarfs von der Prognose sein. Ein zusätzliches Überwachungsmodul erlaubt es, die Wetterprognose der Vorhersage in regelmäßigen Abständen mit den gemessenen Wetterdaten am Ort des Wärmeerzeugers zu vergleichen. Da diese in die Vorhersage des elektrischen Energiebedarfs eingeht, muss die Vorhersage gegebenenfalls neu ausgewertet werden und führt somit zu einem Trigger der Prognose.

In einer Ausgestaltung des Verfahrens ist vorgesehen, dass ein weiteres Überwachungsmodel den Unterschied zwischen gemessenen Raumtemperaturen und der vom Endkunden gewünschten Zieltemperatur beobachtet. In dem Fall, dass der Unterschied der Temperaturen zu groß wird, muss die Vorhersage des elektrischen Energiebedarfs ebenfalls erneut ausgewertet werden oder es muss auf andere Regelmechanismen zurückgegriffen werden, um den Komfort des Endkunden zu garantieren.

In einem siebten Schritt wird aus der Vorhersage des elektrischen Energiebedarfs, in Kombination mit den aktuellen, effektiven Energiepreisen, ein Leistungsplan erstellt. Nach diesem Leistungsplan kann dann der Wärmeerzeuger direkt oder indirekt geregelt werden. Die hier beschriebene Erfindung stellt somit die Grundlage dieses Prozesses dar.

Vorteilhafterweise erfolgt die Regelung aber nicht direkt über den Leistungsplan, sondern es wird aus dem Leistungsplan ein Plan für eine COP-Regelung generiert, da auf diese Weise der elektrische Verbrauch der Wärmepumpe minimal wird. Der COP (Coefficient of Performance) ist dabei abhängig von der Vorlauftemperatur des Heizkreises und von der Drehzahl des üblicherweise eingesetzten Kompressors. Auf diese Weise wird der Einsatz der elektrischen Energiemenge optimiert.

Bei schwankenden Strompreisen, sei es aufgrund von bezogenem elektrischen Strom mit zeitlich variablem Einkaufspreisen oder der Möglichkeit, elektrisch durch eine Photovoltaikanalage erzeugte elektrische Energie teuer zu verkaufen ist es sinnvoll, den COP mit einem modifizierten COP zu nutzen, bei dem nicht der elektrische Energieverbrauch, sondern ersatzweise der Quotient aus Strommenge und Strompreis als entsprechende Führungsgröße für die Regelung verwendet wird. Auf diese Weise wird zwar möglicherweise mehr elektrische Energie eingesetzt, aber insgesamt ist dieser Energieeinsatz günstiger.

## Patentansprüche

1. Verfahren zur Regelung einer elektrischen Wärmepumpe zur Beheizung eines Gebäudes mittels eines Leistungsplans, **gekennzeichnet durch** die folgenden Schritte:
a) Auswertung von Daten, die von der Wärmepumpe und der zugehörigen Regelungstechnik an eine Datenerfassungsinstanz übermittelt wurden,
b) Erfassen von historischen Wetterdaten am Standort der Wärmepumpe,
c) Verbindung der gesammelten Zeitreihendaten mittels einer Datenanalyse,
d) Erstellung eines Modells von Wärmeerzeugern und Verbrauchern,
e) Anpassung des Lastmodells an spezifische Eigenschaften von einzelnen Verbrauchern,
f) Prüfung, ob Umstände eine Neuauswertung erfordern,
g) Erstellung eines Leistungsplans aus der Vorhersage des elektrischen Energiebedarfs.
h) direkte oder indirekte Regelung der Wärmepumpe damit.

2. Verfahren nach Anspruch 1, **dadurch gekennzeichnet, dass** die Beheizung des Gebäudes durch einen Heizungskreislauf mit einem Heizkreisvorlauf und einem Heizungsrücklauf erfolgt, und aus dem Leistungsplan und den Parametern des Verdichters der Wärmepumpe sowie der Vorlauftemperatur des Heizkreises ein COP berechnet wird, der als Führungsgröße für die Regelung der Wärmepumpe verwendet wird.

3. Verfahren nach Anspruch 2, **dadurch gekennzeichnet, dass** aus dem Leistungsplan und den Parametern des Verdichters der Wärmepumpe ein Quotient aus COP und aktuellen Stromkosten berechnet wird, der als Führungsgröße für die Regelung der Wärmepumpe verwendet wird.

4. Verfahren nach einem der Ansprüche 1 bis 3, **dadurch gekennzeichnet, dass** ein weiteres Überwachungsmodel den Unterschied zwischen gemessenen Raumtemperaturen und der vom Endkunden gewünschten Zieltemperatur beobachtet.
